# EUROPÄISCHE PATENTSCHRIFT

(11) **EP 3 684 672 B1**
(45) Veröffentlichungstag und Bekanntmachung des Hinweises auf die Patenterteilung: **20.10.2021**
(21) Anmeldenummer: 18759979.0
(22) Anmeldetag: 05.09.2018
(51) Int. Cl.: B61L 23/04, B61L 1/16, G01D 5/353

(54) **DEHNUNGSMESSANORDNUNG, INSBESONDERE FÜR EINEN ACHSZÄHLER**
STRAIN MEASURING ASSEMBLY, IN PARTICULAR FOR AN AXLE COUNTER
DISPOSITIF DE MESURE DES ALLONGEMENTS, EN PARTICULIER POUR UN COMPTEUR D'ESSIEUX

(30) Priorität: 22.09.2017 EP 17192644
(43) Veröffentlichungstag der Anmeldung: 29.07.2020
(73) Patentinhaber: Thales Management & Services Deutschland GmbH, 71254 Ditzingen (DE)
(72) Erfinder: SCHICKER, Kai, 08539 Mehltheuer (DE); OLDEWURTEL, Kassen, 71706 Markgröningen (DE); KLEMM, Rainer, 71711 Steinheim (DE); MUSCHAWECKH, Florian, 85774 Unterföhring (DE); HOFFMANN, Lars, 80796 München (DE)
(74) Vertreter: Kohler Schmid Möbus Patentanwälte
(86) Internationale Anmeldenummer: PCT/EP2018/073820
(87) Internationale Veröffentlichungsnummer: WO 2019/057491

(56) Entgegenhaltungen:
- EP-A1- 1 128 171
- WO-A1-01/35133
- DE-A1-102014 100 653
- DE-B3-102015 115 925

## Beschreibung

Die Erfindung betrifft eine Dehnungsmessanordnung, insbesondere für einen Achszähler, umfassend
- wenigstens ein Dehnungssensorelement, insbesondere eine optische Faser mit einem Fiber-Bragg-Gitter,
- einen Träger, auf dem das Dehnungssensorelement befestigt ist, und
- eine zu überwachende Struktur, insbesondere eine Eisenbahnschiene, auf der der Träger befestigt ist, wobei zumindest ein Teil des Trägers im auf der Struktur befestigten Zustand des Trägers durch die Struktur in einem elastisch verformten Zustand gehalten wird,
wobei der Träger ausgebildet ist mit einem ersten Trägerstück und einen zweiten Trägerstück, die voneinander beabstandet einander gegenüberliegen, wobei das Dehnungssensorelement zumindest mit einem ersten Fixierpunkt am ersten Trägerstück, und zumindest mit einem zweiten Fixierpunkt am zweiten Trägerstück, und mit einem Mittelabschnitt zwischen den Fixierpunkten weder am ersten noch am zweiten Trägerstück befestigt ist,
wobei der Teil des Trägers, der im auf der Struktur befestigten Zustand des Trägers durch die Struktur in einem elastisch verformten Zustand gehalten wird, ein Blattfederelement umfasst.

Eine solche Dehnungsmessanordnung für einen Achszähler ist insbesondere aus der DE 10 2015 115 925 B3 bekannt geworden.

Um den Eisenbahnverkehr sicherer zu machen, werden Achszähler eingesetzt. Mit Achszählern kann insbesondere überprüft werden, ob der Ort des Achszählers von einem Zug vollständig passiert wurde, um beispielsweise zu ermitteln, ob zugehörige Gleisabschnitte vollständig frei geworden sind.

Ein mögliches Messprinzip von Achszählern beruht darauf, eine durch die von einer Achse übertragene Gewichtskraft eines Zuges verursachte elastische Verformung an einer Schiene mit einem Dehnungssensorelement zu messen.

Die EP 3 069 952 A1 schlägt dazu vor, als Dehnungssensorelement ein Faser-Bragg-Gitter (=FBG, auch Fiber Bragg Gitter) auf einer Schiene unter einer Vorspannung zu befestigen. Die Reflektionswellenlänge des Faser-Bragg-Gitters ist abhängig vom elastischen Dehnungszustand des FBGs, wodurch der Dehnungszustand vermessen werden kann. Durch die Vorspannung kann am Dehnungszustand des FBGs erkannt werden, ob das FBG noch korrekt an der Schiene befestigt oder von der Schiene abgefallen ist. In einer Variante wird vorgeschlagen, die Vorspannung thermisch aufzubringen, indem ein Träger unter Vorspannung an der Schiene angebracht wird.

Aus der DE 10 2005 010 344 A1 ist es zudem bekannt, die Dämpfungseigenschaften in einem Lichtwellenleiter über Biegungszustände zu beeinflussen.

Weiterhin sind beispielsweise auch Dehnungssensorelemente bekannt geworden, die auf einer Widerstands- oder Kapazitätsänderung aufgrund eines veränderlichen Dehnungszustands beruhen.

Das Befestigen von Dehnungssensorelementen unter Vorspannung direkt auf einer zu überwachenden Struktur, etwa einer Eisenbahnschiene, ist jedoch vergleichsweise schwierig. Durch Aufbringung der Vorspannung über einen Träger, auf dem der Dehnungssensor fixiert ist, kann eine gewisse Vereinfachung erzielt werden. Jedoch ist auch in diesem Falle die Einstellung eines bestimmten Dehnungszustands am Dehnungssensorelement (etwa zur Einstellung eines Arbeitspunkts) schwierig.

Die DE 10 2015 115 925 B3 beschreibt einen faseroptischen Sensor mit einer Trägerstruktur. Die Trägerstruktur umfasst zwei Befestigungselemente, zwischen denen mit Befestigungspunkten ein Lichtleiter vorgespannt ist. Die Trägerstruktur verfügt über ein auf zwei Seiten bogenförmig ausgebildetes elastisches Element, mit dem in den Lichtleiter in Längsrichtung eine Vorspannung eingebracht wird. Die Trägerstruktur ist über Verbindungsflächen auf einem Zwischenträger befestigt.

Die EP 1 128 171 A1 beschreibt einen faseroptischen Belastungssensor zur Detektion von Schienenfahrzeugen, wobei eine Lichtleitfaser um eine Stützstruktur aus Stäben geflochten ist.

### Aufgabe der Erfindung

Der Erfindung liegt die Aufgabe zugrunde, eine einfach zu handhabende Dehnungsmessanordnung vorzustellen, bei der ein Abfallen zuverlässig erkennbar und ein Dehnungszustand des Dehnungssensorelements leichter vorgebbar ist.

### Kurze Beschreibung der Erfindung

Diese Aufgabe wird gelöst durch eine Dehnungsmessanordnung der eingangs genannten Art, die dadurch gekennzeichnet ist,
dass an dem Blattfederelement ausgebildet ist
- ein Stützelement zum Abstützen an der Struktur im auf der Struktur befestigten Zustand des Trägers, wobei im auf der Struktur befestigten Zustand des Trägers das Stützelement das Blattfederelement nach oben von der Struktur wegdrückt, wodurch das Blattfederelement elastisch verformt wird, und
- ein Mitnahmeelement zum Hintergreifen des Dehnungssensorelements im Mittelabschnitt, wobei nach einer Ablösung des Trägers von der Struktur das Blattfederelement in einen elastisch unverformten Zustand zurückfedert und das Mitnahmeelement auf das Dehnungssensorelement drückt und diesem eine elastische Dehnung aufprägt.

Im Rahmen der Erfindung ist es vorgesehen, das Dehnungssensorelement nicht über seine gesamte Messlänge am Träger linienhaft zu befestigen, sondern das Dehnungssensorelement lediglich mit einem ersten Fixierpunkt an einem ersten Trägerstück, und mit einem zweiten Fixierpunkt an einem zweiten Trägerstück. Im dazwischen liegenden Mittelabschnitt wird das Dehnungssensorelement frei gehalten.

Dadurch ist es grundsätzlich möglich, den Dehnungszustand des Dehnungssensorelements vom elastischen Verformungszustand des Trägers zumindest teilweise zu entkoppeln. Es wird insbesondere möglich, eine elastische Verformung des Trägers infolge einer Verformung der überwachten Struktur je nach Anwendungsfall abgeschwächt oder verstärkt oder erst ab bestimmten Schwellwerten auf das Dehnungssensorelement zu übertragen, oder bestimmte Arten von Verformung des Trägers verstärkt auf das Dehnungssensorelement zu übertragen. Dadurch kann das

Dehnungssensorelement in einem optimalen Arbeitsbereich betrieben werden, und bestimmte Überwachungsfunktionen des Dehnungssensorelements, etwa die Erkennung eines Abfallens von der Struktur, können zuverlässiger gemacht werden. Gleichzeitig kann die Befestigung des Trägers an der Struktur mit einer einfach zu beherrschenden elastischen Verformung des Trägers erfolgen, ohne durch das Dehnungssensorelement zu sehr eingeschränkt zu sein.

Am Mittelabschnitt ist ein einfacher und direkter Zugriff auf das Dehnungssensorelement möglich, insbesondere ohne durch eine Vorformung eines darunter liegenden Trägers in der Verformung des Dehnungssensorelements festgelegt zu sein. Im Mittelabschnitt kann beispielsweise eine zusätzliche Straffung (etwa durch das Mitnahmeelement), oder auch eine zusätzliche Entlastung (etwa durch Überlänge) des Dehnungssensorelements gegenüber dem Träger erfolgen.

Die Befestigung des Trägers auf der zu überwachenden Struktur, wobei zumindest ein Teil des Trägers durch die Struktur in einem elastisch verformten Zustand gehalten wird, ermöglicht auf einfache Weise eine Kontrolle, ob die Dehnungsmessanordnung noch korrekt an der Struktur sitzt oder von der Struktur abgefallen ist; letzteres führt zu einem Zurückfedern in einen elastisch unverformten Zustand des Trägers bzw. zumindest des besagten Teils. Ein Abfallen von der Struktur kann beispielsweise bei einer Alterung oder temperaturbedingten Erweichung einer Befestigung vorkommen. Bevorzugt ist die Dehnungsmessanordnung so ausgebildet, dass die elastische Verformung bzw. Verspannung des Trägers über eine gemessene Dehnung des Dehnungssensorelements ermittelbar ist (d.h. die elastische Verformung des Trägers liegt im überwachten Bereich des Dehnungssensorelements). Alternativ ist es auch möglich, eine von dem Dehnungssensorelement bzw. dessen Dehnung separate Messeinrichtung bzw. Messung vorzusehen, mit der die Verformung des Trägers überprüft werden kann (etwa unter Verwendung eines weiteres Dehnungssensorelements).

Meist umfasst eine Dehnungsmessanordnung lediglich ein Dehnungssensorelement, alternativ auch zwei oder noch mehr Dehnungssensorelemente.

Ein Dehnungssensorelement ist im Rahmen der Erfindung mit einem ersten und zweiten Fixierpunkt an einem ersten und zweiten Trägerstück befestigt sind, und in einem Mittelabschnitt nicht an diesen Trägerstücken (und auch nicht an anderen Teilen des Trägers) befestigt. Der Träger umfasst neben dem ersten und zweiten Trägerstück meist noch ein oder mehrere weitere Teilstücke (etwa ein Grundelement oder eine Spange).

Das Dehnungssensorelement ist bevorzugt als eine optische Faser mit einem Fiber-Bragg-Gitter (=FBG) ausgebildet; das FBG befindet sich dabei zwischen den Fixierpunkten im Mittelabschnitt. Typischerweise ist das Dehnungssensorelement im auf der Struktur befestigtem Zustand des Trägers unter einer geringen elastischen Dehnung, so dass sowohl Stauchungen als auch Streckungen der zu überwachenden Struktur leicht erkannt werden können.

Eine erfindungsgemäße Dehnungsmessanordnung kann insbesondere in einem Achszähler verwendet werden; ein solcher Achszähler umfasst wenigstens eine erfindungsgemäße Dehnungsmessanordnung. Es können aber auch andere Anwendungen für die Dehnungsmessanordnung vorgesehen sein, etwa zur Überwachung von mechanischer Belastung oder Verschleiß von Maschinenbauteilen. Ein Dehnungssensorelement kann unter schrägem Winkel, etwa einem Winkel von ca. 45°, zu einer neutralen Faser einer zu überwachenden Struktur angeordnet werden. Die Befestigung des Trägers auf der zu überwachenden Struktur kann beispielsweise durch Verschrauben, Verlöten oder Verkleben erfolgen. Die Befestigung des Dehnungssensorelements an den Trägerstücken kann beispielsweise durch Verklemmen, Verlöten oder Verkleben erfolgen.

Zusammenfassend ist es mit der Erfindung besonders einfach möglich, zum einen das Dehnungssensorelement (im auf der Struktur befestigten Zustand des Trägers) auf einer gewünschten Vorspannung zu halten, und zum anderen mittels zumindest des Teils des Trägers zu überwachen, ob der Träger noch an der zu überwachenden Struktur (ausreichend) befestigt ist.

Bei der erfindungsgemäßen Dehnungsmessanordnung ist vorgesehen, dass der Teil des Trägers, der im auf der Struktur befestigten Zustand des Trägers durch die Struktur in einem elastisch verformten Zustand gehalten wird, ein Blattfederelement umfasst,
und dass an dem Blattfederelement ausgebildet ist
- ein Stützelement zum Abstützen an der Struktur im auf der Struktur befestigten Zustand des Trägers, und
- ein Mitnahmeelement zum Hintergreifen des Dehnungssensorelements im Mittelabschnitt. Durch das an der Struktur anliegende Stützelement wird dem Blattfederelement eine elastische Verformung aufgeprägt. Das Mitnahmeelement bewegt sich typischerweise im Wesentlichen senkrecht zur Erstreckungsrichtung (Messrichtung) des Dehnungssensorelements und typischerweise im Wesentlichen senkrecht zur Oberfläche der Struktur, an der der Träger befestigt ist. Mit dem Mitnahmeelement kann abhängig von der Verformung des Blattfederelements dem Dehnungssensorelement eine elastische Dehnung oder auch eine Biegung aufgeprägt werden. Diese Dehnung oder Biegung kann durch das Dehnungssensorelement gemessen werden (etwa über die Dehnung als solche, oder auch über eine veränderte, meist erhöhte Dämpfung), und so die Ablösung des Trägers von der Struktur leicht erkannt werden. Die erfindungsgemäße Bauform erkennt eine Ablösung des Dehnungssensorelements von der zu überwachenden Struktur besonders zuverlässig. Zum Erkennen des Sensorabfalls ist lediglich eine elastische Verformung des Blattfederelements notwendig; insbesondere braucht kein Befestigen (etwa Verkleben) von elastisch gegeneinander verspannten Trägerflächen auf der Struktur erfolgen, was die Installation besonders einfach macht.

### Bevorzugte Ausführungsformen der Erfindung

Bei einer bevorzugten Ausführungsform der erfindungsgemäßen Dehnungsmessanordnung ist im auf der Struktur befestigten Zustand des Trägers das Mitnahmeelement so weit angehoben, dass dieses das Dehnungssensorelement nicht berührt.

Bei einer weiteren Ausführungsform sind das Blattfederelement und das Mitnahmeelement so ausgebildet, dass durch diese im elastisch verformten Zustand des Blattfederelements bei auf der Struktur befestigtem Träger auf das Dehnungssensorelement keine oder nur eine geringe Dehnung aufgeprägt wird, und in einem elastisch entspannten Zustand des Blattfederelements nach einer Ablösung des Trägers von der Struktur auf das Dehnungssensorelement eine größere Dehnung aufgeprägt wird. Das Blattfederelement (zusammen mit dem Mitnahmeelement) strafft und/oder verbiegt in seinem elastisch entspannten Zustand das Dehnungssensorelement, was in der Regel leicht zu detektieren ist; umgekehrt sind das Blattfederelement und das Mitnahmeelement (sowie das Stützelement) so ausgebildet, dass im elastisch verspannten Zustand das Dehnungssensorelement vom Mitnahmeelement nicht oder nur wenig gestrafft wird. Es ist alternativ auch möglich, das Dehnungssensorelement im elastisch entspannten Zustand des Blattfederelements zu entspannen.

Bevorzugt ist zudem eine Ausführungsform, die vorsieht, dass das Mitnahmeelement einen auf das Dehnungssensorelement zu nach unten ragenden Mitnahmefortsatz aufweist, und dass in dem elastisch unverformten Zustand des Blattfederelements das Mitnahmeelement mit dem Mitnahmefortsatz auf das Dehnungssensorelement drückt.

Bevorzugt ist auch eine Ausführungsform, die vorsieht,
dass der Träger ein Grundelement aufweist, mit dem der Träger an der zu überwachenden Struktur befestigt ist,
und dass das erste Trägerstück und das zweite Trägerstück auf oder an dem Grundelement befestigt sind. Über das Grundelement kann eine gezielte und vereinfachte Befestigung an der Struktur erfolgen, insbesondere auch flächig. Die Trägerstücke sind in der Regel lediglich über das Grundelement auf der Struktur befestigt. Eine typische Grundstruktur ist als ein geschlossener Ring ("Rahmen") ausgebildet, und die Trägerstücken ragen nach innen in den Ring ein. Eine andere typische Grundstruktur ist mit einer geschlossenen Fläche ausgebildet, auf der die Trägerstücke aufsitzen.

Eine bevorzugte Weiterbildung dieser Ausführungsform sieht vor, dass das erste und zweite Trägerstück jeweils lediglich in einem hinteren Bereich, der dem Dehnungssensorelement abgewandt ist, am Grundelement befestigt sind, und dass das erste und zweite Trägerstück jeweils in einem vorderen Bereich, der dem hinteren Bereich abgewandt ist, am Dehnungssensorelement befestigt sind. Die Trägerstücke sind lediglich über das Grundelement auf der Struktur befestigt, wobei die Befestigung am hinteren Bereich des jeweiligen Trägerstücks erfolgt. Die Trägerstücke zeigen (zwischen vorderem und hinterem Bereich) typischerweise keine merkliche elastische Verformung. Durch den Abstand von vorderem Bereich und hinterem Bereich wird die elastische Dehnung des Grundkörpers bzw. der Struktur verstärkt auf das Dehnungssensorelement übertragen. Typischerweise ist die gesamte Länge GL der Trägerstücke zwischen vorderem und hinterem Bereich wenigstens dreimal so groß wie die Länge AE des Dehnungssensorelements zwischen den Fixierpunkten.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: eine schematische Aufsicht auf eine Bauform einer nicht erfindungsgemäßen Dehnungsmessanordnung, mit rahmenförmigem Grundelement, zur allgemeinen Erläuterung;
- Fig. 1b: eine schematische Querschnittsansicht der Dehnungsmessanordnung von Fig. 1a;
- Fig. 2a: eine schematische Aufsicht auf eine Ausführungsform einer erfindungsgemäßen Dehnungsmessanordnung, mit Blattfederelement, Stützelement und Mitnahmeelement;
- Fig. 2b: eine schematische Seitenansicht der Dehnungsmessanordnung von Fig. 2a, mit auf der Struktur befestigtem Träger;
- Fig. 2c: eine schematische Seitenansicht der Dehnungsmessanordnung von Fig. 2a, mit von der Struktur abgelöstem Träger.

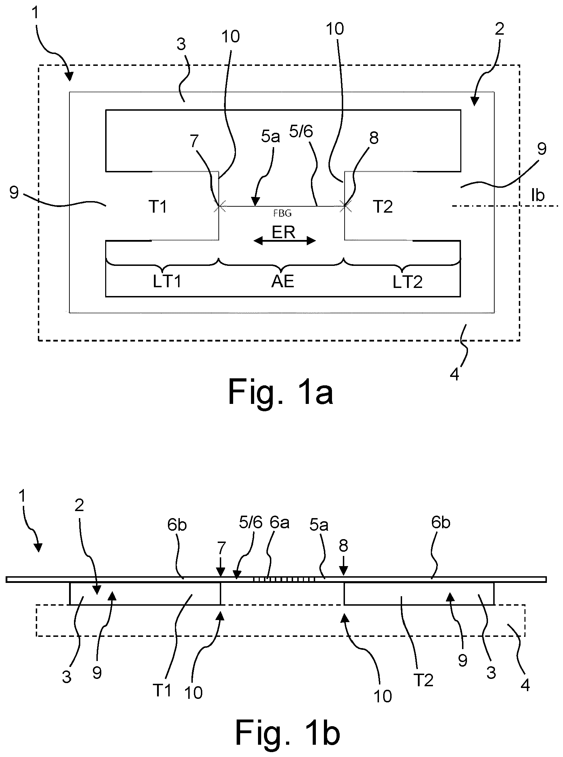

Die **Fig. 1a** zeigt zur allgemeinen Erläuterung eine Bauform einer nicht erfindungsgemäßen Dehnungsmessanordnung 1 in einer Aufsicht, und **Fig. 1b** eine zugehörige Querschnittsansicht, vgl. Ebene Ib in Fig. 1a.

Die Dehnungsmessanordnung 1 umfasst einen Träger 2, der hier ein ringförmig geschlossenes, im Wesentlichen rechteckiges Grundelement 3 sowie ein erstes Trägerteil T1 und ein zweites Trägerteil T2 umfasst. Die Trägerteile T1, T2 stehen nach innen vom Grundelement 3 ab, welches einen äußeren Rahmen des Trägers 2 ausbildet.

Der Träger 2 ist mit dem rahmenförmigen Grundelement 3 in nicht näher dargestellter Weise auf einer zu überwachenden Struktur 4 befestigt, beispielsweise mit der gesamten Unterseite des Grundelements 3 auf der Struktur 4 aufgeklebt; die Unterseiten der Trägerstücke T1, T2 sind jedoch nicht auf der Struktur 4 aufgeklebt, sondern liegen nur auf der Struktur 4 auf. Die zu überwachende Struktur 4 kann beispielsweise eine Eisenbahnschiene einer Zugfahrstrecke sein.

Auf den Trägerstücken T1 und T2 ist ein Dehnungssensorelement 5 an Fixierpunkten 7, 8 befestigt. Die Fixierpunkte 7, 8 liegen jeweils am inneren Ende der Teilstücke T1, T2. Der zwischen den Fixierpunkten 7, 8 liegende Mittelabschnitt 5a des Dehnungssensorelements 5 ist hier zwischen den Teilstücken T1, T2 frei gespannt.

In der gezeigten Bauform ist das Dehnungssensorelement 5 als eine optische Faser 6 mit einem Fiber-Bragg-Gitter (auch Faser Bragg Gitter, FBG) 6a im Mittelabschnitt 5a ausgebildet. Man beachte, dass in Fig. 1a zur Vereinfachung die Faser 6 nur im Bereich des Mittelabschnitts 5a dargestellt ist; Fig. 1b zeigt auch Zuleitungen 6b der Faser 6. Alternativ können auch andere Dehnungssensorelement-Typen, etwa elektrische Widerstandsmessstreifen, eingesetzt werden.

In einem Grundzustand für die Verwendung des Dehnungssensorelements 5 zur Überwachung der Dehnung der Struktur 4 ist das Dehnungssensorelement 5 typischerweise im Mittelabschnitt 5a in Erstreckungsrichtung ER der Faser 6 geringfügig elastisch gedehnt, um den Arbeitspunkt des FBGs einzustellen. Die elastische Dehnung des Dehnungssensorelements 5 kann dabei bei der bzw. durch die Befestigung des Dehnungssensorelements 5 an den Fixierpunkten 7, 8 (im Grundzustand) praktisch beliebig vorgegeben werden.

Verformt sich die Struktur 4, so wird auch das Grundelement 3, das auf der Struktur 4 befestigt ist, mit verformt. Diese Verformung des Grundelements 3 wird über die Trägerstücke T1, T2 auf das Dehnungssensorelement 5 übertragen, wodurch diese Verformung messbar wird.

Eine gesamte Länge GL der Teilstücke T1, T2 jeweils vom hinteren Bereich 9 bis zum vorderen Bereich 10, wo der jeweilige Fixierpunkt 7, 8 angeordnet ist, mit GL=LT1+LT2, ist hier deutlich größer als der Abstand AE der Fixierpunkte 7, 8. In der gezeigten Bauform gilt näherungsweise GL=2*AE; im allgemeinen ist GL≥2*AE oder auch GL≥3*AE bevorzugt. Durch die parallel zur Erstreckungsrichtung ER des Dehnungssensorelements 5 hervorstehenden Teilstücke T1, T2, die die bei Verformung der Struktur 4 entlang der Erstreckungsrichtung ER sich zwar bewegen, aber selbst kaum verformt werden, kann die Verformung der Struktur 4 bzw. des Rahmens in Erstreckungsrichtung ER verstärkt auf das Dehnungssensorelement 5 übertragen werden, entsprechend dem Verhältnis AE/(LT1+AE+LT2).

Im bereits erwähnten Grundzustand ist das rahmenförmige Grundelement 3 in einem elastisch verformten Zustand, in welchem es durch die darunter liegende Struktur 4, auf der das Grundelement 3 befestigt ist, gehalten wird. Vorliegend ist das Grundelement 3 bezüglich der Erstreckungsrichtung ER geringfügig elastisch gestreckt. Falls das Grundelement 3 bzw. der Träger 2 von der Struktur 4 abfallen sollte, würde die elastische Verformung des Grundelements 3 zurückfedern, hier also sich das Grundelement 3 in Erstreckungsrichtung ER zusammenziehen. Dadurch würde auch der elastische Dehnungszustand des Dehnungssensorelements 5 verändert, wodurch das Abfallen von der Struktur 4 aufgedeckt werden kann.

In der nachfolgend beschriebenen Ausführungsform der erfindungsgemäßen Dehnungsmessanordnung werden vor allem die Unterschiede zur Bauform von Fig. 1a, 1b erläutert.

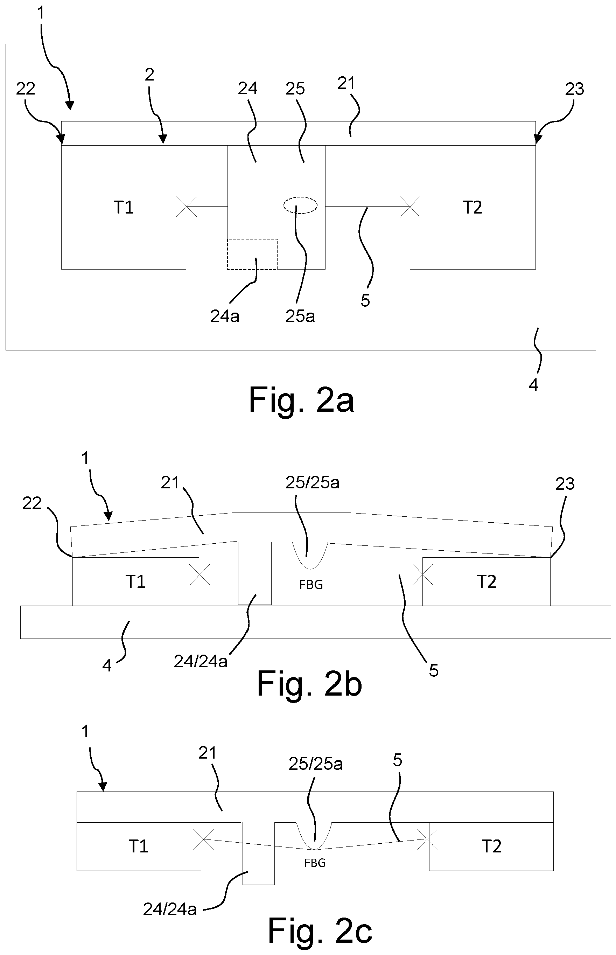

Die Ausführungsform einer erfindungsgemäßen Dehnungsmessanordnung 1 ist in Aufsicht in **Fig. 2a** sowie in Seitenansicht in **Fig. 2b** im befestigten Zustand auf der Struktur 4 und in **Fig. 2c** im abgelösten Zustand dargestellt.

Die Dehnungsmessanordnung 1 verfügt über einen Träger 2, der neben den Teilstücken T1, T2 weiterhin ein Blattfederelement 21 umfasst. In der gezeigten Ausführungsform verbindet das Blattfederelement 21 die beiden Trägerstücke T1, T2 miteinander, wobei das Blattfederelement 21 mit seinen Enden 22, 23 jeweils an den Teilstücken T1, T2 befestigt ist; die Endbereiche des Blattfederelements 21 übergreifen jeweils die Teilstücke T1, T2.

Am Blattfederelement 21 ist ein Stützelement 24 ausgebildet, welches hier das Dehnungssensorelement 5 übergreift und sich mit einem Stützfortsatz 24a auf der zu überwachenden Struktur 4 als Anschlagpartner abstützt. Im auf der Struktur 4 befestigten Zustand (vgl. Fig. 2b) des Trägers 2 drückt dabei das Stützelement 24 das Blattfederelement 21 nach oben von der Struktur 4 weg, wodurch das Blattfederelement 21 elastisch verformt, nämlich hier gedehnt wird.

Am Blattfederelement 21 ist zudem ein Mitnahmeelement 25 ausgebildet, das hier ebenfalls das Dehnungssensorelement 5 übergreift und hier einen in Richtung auf das Dehnungssensorelement 5 zu nach unten ragenden Mitnahmefortsatz 25a aufweist. Der Mitnahmefortsatz 25a hintergreift das Dehnungssensorelement 5 also von oben. Im durch die Abstützung auf der Struktur 4 elastisch verformten Zustand des Blattfederelements 21 (vgl. Fig. 2b) ist in der gezeigten Ausführungsform das Mitnahmeelement 25 (bzw. dessen Mitnahmefortsatz 25a) so weit angehoben, dass dieses das Dehnungssensorelement 5 nicht berührt. Entsprechend hat das Dehnungssensorelement 5 seinen für den normalen Messbetrieb (zur Dehnungsüberwachung der Struktur 4) vorgesehenen, normalen Dehnungszustand.

Falls die Dehnungsmessanordnung 1 von der Struktur 4 abfallen sollte, so federt das Blattfederelement 21 in einen elastisch unverformten Zustand zurück, der in Fig. 2c gezeigt ist, da das Stützelement 24 vorderenends keinen Anschlagpartner mehr hat. In diesem Zustand drückt der Mitnahmefortsatz 25a des Mitnahmeelements 25 auf das Dehnungssensorelement 5 und prägt diesem eine starke elastische Dehnung auf. Diese starke elastische Dehnung ist gut zu vermessen, wodurch das Abfallen der Dehnungsmessanordnung 1 von der Struktur 4 leicht erkannt werden kann.

Bei der Ausführungsform von Fig. 2a-2c können die Trägerteile T1, T2 bzw. der Träger 2 ohne nennenswerte Scherspannung auf der zu überwachenden Struktur 4 befestigt werden, was die Montage vereinfacht.

### Bezugszeichenliste

- 1: Dehnungsmessanordnung
- 2: Träger
- 3: Grundelement
- 4: zu überwachende Struktur
- 5: Dehnungssensorelement
- 5a: Mittelabschnitt
- 6: optische Faser
- 6a: Fiber-Bragg-Gitter
- 6b: Zuleitung
- 7: erster Fixierpunkt
- 8: zweiter Fixierpunkt
- 9: hinterer Bereich
- 10: vorderer Bereich
- 21: Blattfederelement
- 22: Ende (Blattfederelement)
- 23: Ende (Blattfederelement)
- 24: Stützelement
- 24a: Stützfortsatz
- 25: Mitnahmeelement
- 25a: Mitnehmerfortsatz
- AE: Abstand Fixierpunkte
- ER: Erstreckungsrichtung (Dehnungssensorelement)
- GL: gesamte Länge Teilstücke T1, T2
- FBG: Fiber Bragg Gitter (Faser Bragg Gitter)
- LT1: Länge Teilstück T1
- LT2: Länge Teilstück T2
- T1: erstes Teilstück (Dehnungssensorelement)
- T2: zweites Teilstück (Dehnungssensorelement)

## Patentansprüche

1. Dehnungsmessanordnung (1), insbesondere für einen Achszähler (91), umfassend
- wenigstens ein Dehnungssensorelement (5), insbesondere eine optische Faser (6) mit einem Fiber-Bragg-Gitter (6a, FBG),
- einen Träger (2), auf dem das Dehnungssensorelement (5) befestigt ist, und
- eine zu überwachende Struktur (4), insbesondere eine Eisenbahnschiene, auf der der Träger (2) befestigt ist, wobei zumindest ein Teil des Trägers (2) im auf der Struktur (4) befestigten Zustand des Trägers (2) durch die Struktur (4) in einem elastisch verformten Zustand gehalten wird,
wobei der Träger (2) ausgebildet ist mit einem ersten Trägerstück (T1) und einen zweiten Trägerstück (T2), die voneinander beabstandet einander gegenüberliegen,
wobei das Dehnungssensorelement (5) zumindest mit einem ersten Fixierpunkt (7) am ersten Trägerstück (T1), und zumindest mit einem zweiten Fixierpunkt (8) am zweiten Trägerstück (T2), und mit einem Mittelabschnitt (5a) zwischen den Fixierpunkten (7, 8) weder am ersten noch am zweiten Trägerstück (T1, T2) befestigt ist,
wobei der Teil des Trägers (2), der im auf der Struktur (4) befestigten Zustand des Trägers (2) durch die Struktur (4) in einem elastisch verformten Zustand gehalten wird, ein Blattfederelement (21) umfasst,
**dadurch gekennzeichnet,**
**dass** an dem Blattfederelement (21) ausgebildet ist
- ein Stützelement (24) zum Abstützen an der Struktur (4) im auf der Struktur (4) befestigten Zustand des Trägers (2), wobei im auf der Struktur (4) befestigten Zustand des Trägers (2) das Stützelement (24) das Blattfederelement (21) nach oben von der Struktur (4) wegdrückt, wodurch das Blattfederelement (21) elastisch verformt wird, und
- ein Mitnahmeelement (25) zum Hintergreifen des Dehnungssensorelements (5) im Mittelabschnitt (5a), wobei nach einer Ablösung des Trägers (2) von der Struktur (4) das Blattfederelement (21) in einen elastisch unverformten Zustand zurückfedert und das Mitnahmeelement (25) auf das Dehnungssensorelement (5) drückt und diesem eine elastische Dehnung aufprägt.

2. Anordnung (1) nach Anspruch 1, **dadurch gekennzeichnet,**
**dass** im auf der Struktur (4) befestigten Zustand des Trägers (2) das Mitnahmeelement (25) so weit angehoben ist, dass dieses das Dehnungssensorelement (5) nicht berührt.

3. Anordnung (1) nach Anspruch 1 oder 2, **dadurch gekennzeichnet, dass** das Blattfederelement (21) und das Mitnahmeelement (25) so ausgebildet sind, dass durch diese im elastisch verformten Zustand des Blattfederelements (21) bei auf der Struktur (4) befestigtem Träger (2) auf das Dehnungssensorelement (5) keine oder nur eine geringe Dehnung aufprägt wird, und in einem elastisch entspannten Zustand des Blattfederelements (21) nach einer Ablösung des Trägers (2) von der Struktur (4) auf das Dehnungssensorelement (5) eine größere Dehnung aufgeprägt wird.

4. Anordnung nach einem der Ansprüche 1 bis 3, **dadurch gekennzeichnet, dass** das Mitnahmeelement (25) einen auf das Dehnungssensorelement (5) zu nach unten ragenden Mitnahmefortsatz (25a) aufweist, und dass in dem elastisch unverformten Zustand des Blattfederelements (21) das Mitnahmeelement (25) mit dem Mitnahmefortsatz (25a) auf das Dehnungssensorelement (5) drückt.

## Claims

1. A strain gauge arrangement (1), in particular for an axle counter (91), comprising
- at least one strain sensor element (5), in particular an optical fiber (6) with a fiber Bragg grating (6a, FBG),
- a carrier (2), to which the strain sensor element (5) is fastened, and
- a structure (4) to be monitored, in particular a railroad track, to which the carrier (2) is fastened, wherein at least a part of the carrier (2) is kept in an elastically deformed state by the structure (4) when the carrier (2) is fastened to the structure (4),
wherein the carrier (2) is embodied with a first carrier piece (T1) and a second carrier piece (T2), which oppose one another in spaced apart fashion,
wherein the strain sensor element (5) is fastened to the first carrier piece (T1) with at least one first fixing point (7), to the second carrier piece (T2) with at least one second fixing point (8), and to neither the first nor the second carrier piece (T1, T2) with a central section (5a) between the fixing points (7, 8),
wherein the part of the carrier (2) which is kept in an elastically deformed state by the structure (4) when the carrier (2) is fastened to the structure (4) comprises a leaf spring element (21),
**characterized**
**in that** the following are formed on the leaf spring element (21):
- a support element (24) for support on the structure (4) when the carrier (2) is fastened to the structure (4), wherein, when the carrier (2) is fastened to the structure (4), the support element (24) pushes the leaf spring element (21) upwardly away from the structure (4), as a result of which the leaf spring element (21) is elastically deformed, and
- a driver element (25) for reaching behind the strain sensor element (5) in the central section (5a), wherein, following a detachment of the carrier (2) from the structure (4), the leaf spring element (21) springs back into an elastically non-deformed state and the driver element (25) presses against the strain sensor element (5) and impresses an elastic strain on the latter.

2. The arrangement (1) as claimed in claim 1, **characterized in that**, when the carrier (2) is fastened to the structure (4), the driver element (25) is lifted so far that the latter does not contact the strain sensor element (5).

3. The arrangement (1) as claimed in claim 1 or 2, **characterized in that** the leaf spring element (21) and the driver element (25) are embodied in such a way that no strain, or only little strain, is applied to the strain sensor element (5) by said leaf spring and driver elements in the elastically deformed state of the leaf spring element (21) when the carrier (2) is fastened to the structure (4), and a greater strain is applied to the strain sensor element (5) in an elastically relaxed state of the leaf spring element (21) after the carrier (2) has been detached from the structure (4).

4. The arrangement as claimed in any one of claims 1 to 3, **characterized in that** the driver element (25) has a driver projection (25a) projecting downward towards the strain sensor element (5) and **in that**, in the elastically non-deformed state of the leaf spring element (21), the driver element (25) presses on the strain sensor element (5) by way of the driver projection (25a).

## Revendications

1. Agencement (1) de mesure d'allongements destiné, en particulier, à un compteur d'essieux (91), comprenant
- au moins un élément (5) détecteur d'allongements, notamment une fibre optique (6) munie d'un réseau de Bragg sur fibre (6a, FBG),
- un support (2), sur lequel ledit élément (5) détecteur d'allongements est fixé,
et
- une structure (4) objet d'une surveillance, notamment un rail ferroviaire sur lequel ledit support (2) est fixé, sachant qu'à l'état de fixation du support (2) sur la structure (4), au moins une partie dudit support (2) est maintenue, par ladite structure (4), dans un état de déformation élastique,
ledit support (2) étant muni d'un premier tronçon (T1) et d'un second tronçon (T2) se faisant face à distance l'un de l'autre,
l'élément (5) détecteur d'allongements étant fixé au premier tronçon (T1) du support par au moins un premier point (7) de blocage à demeure, étant fixé au second tronçon (T2) dudit support par au moins un second point (8) de blocage à demeure, et n'étant fixé à aucun desdits premier et second tronçons (T1, T2) dudit support par une région médiane (5a), entre lesdits points (7, 8) de blocage à demeure,
sachant que la partie du support (2), maintenue par la structure (4) dans un état de déformation élastique lorsque ledit support (2) est à l'état fixé sur ladite structure (4), inclut un élément (21) à lame de ressort,
**caractérisé par le fait**
**que** l'élément (21) à lame de ressort est pourvu
- d'un élément d'appui (24) conçu pour procurer un appui sur la structure (4) lorsque le support (2) est à l'état fixé sur ladite structure (4), sachant qu'à l'état de fixation dudit support (2) sur ladite structure (4), ledit élément d'appui (24) repousse ledit élément (21) à lame de ressort vers le haut, à l'écart de ladite structure (4), de sorte que ledit élément (21) à lame de ressort est déformé élastiquement, et
- d'un élément d'entraînement (25) conçu pour venir en prise par-derrière avec l'élément (5) détecteur d'allongements, dans la région médiane (5a), sachant qu'à l'issue d'une dissociation du support (2) d'avec la structure (4), l'élément (21) à lame de ressort retourne, par effet de rebond, à un état non déformé élastiquement, et ledit élément d'entraînement (25) exerce une pression sur ledit élément (5) détecteur d'allongements, auquel il imprime un allongement élastique.

2. Agencement (1) selon la revendication 1, **caractérisé par le fait que**, lorsque le support (2) est à l'état fixé sur la structure (4), l'élément d'entraînement (25) est soulevé d'une course telle qu'il ne touche pas l'élément (5) détecteur d'allongements.

3. Agencement (1) selon la revendication 1 ou 2, **caractérisé par le fait que** l'élément (21) à lame de ressort et l'élément d'entraînement (25) sont réalisés de façon telle qu'ils n'impriment, à l'élément (5) détecteur d'allongements, aucun allongement ou uniquement un allongement modeste à l'état de déformation élastique dudit élément (21) à lame de ressort, lorsque le support (2) est à l'état fixé sur la structure (4), et qu'ils impriment un allongement plus accentué audit élément (5) détecteur d'allongements, à l'issue d'une dissociation dudit support (2) d'avec ladite structure (4), dans un état de relâchement élastique dudit élément (21) à lame de ressort.

4. Agencement selon l'une des revendications 1 à 3, **caractérisé par le fait que** l'élément d'entraînement (25) comporte un appendice d'entraînement (25a) faisant saillie vers le bas, en direction de l'élément (5) détecteur d'allongements ; et **par le fait qu'**à l'état non déformé élastiquement de l'élément (21) à lame de ressort, ledit élément d'entraînement (25) exerce une pression sur ledit élément (5) détecteur d'allongements par ledit appendice d'entraînement (25a).
